# EUROPÄISCHE PATENTSCHRIFT

(11) **EP 1 199 921 B1**
(45) Veröffentlichungstag und Bekanntmachung des Hinweises auf die Patenterteilung: **22.01.2003**
(21) Anmeldenummer: 00956214.1
(22) Anmeldetag: 19.07.2000
(51) Int. Cl.: A01D 45/02

(54) **ERNTEGERÄT**
HARVESTING EQUIPMENT
APPAREIL DE MOISSONNAGE

(30) Priorität: 19.07.1999 DE 19933777; 19.07.1999 DE 19933778; 19.07.1999 DE 19933780; 30.09.1999 DE 19947288; 26.10.1999 DE 19951459; 26.10.1999 DE 19951636; 01.11.1999 DE 19952566
(43) Veröffentlichungstag der Anmeldung: 02.05.2002
(73) Patentinhaber: Maschinenfabrik Bernard Krone GmbH, 48480 Spelle (DE)
(72) Erfinder: KRONE, Dr.-Ing.E.h. Bernard, 48480 Spelle (DE); AHLER, Wilhelm, 48703 Stadtlohn (DE); KELLER, Alfons, 49497 Mettingen (DE)
(74) Vertreter: Busse, Dietrich, Dipl.-Ing.
(86) Internationale Anmeldenummer: EP0006913
(87) Internationale Veröffentlichungsnummer: WO01005219

(56) Entgegenhaltungen:
- EP-A- 0 508 189
- EP-A- 0 673 594
- DE-A- 3 623 380
- FR-A- 2 548 518
- US-A- 3 813 858
- US-A- 5 040 362

## Beschreibung

Die Erfindung bezieht sich auf ein Erntegerät zum Ernten von Mais oder dergleichen stengelartigem Erntegut nach dem Oberbegriff des Anspruchs 1.

Aus der DE 33 24 899 C2 ist ein gattungsgemäßes Erntegerät bekannt, bei der das Erntegut von in einer Laschenkette eingehängten Schneidwerkzeugen abgeschnitten und von weiterhin in der Laschenkette eingehängten Haltemitteln zu einer Eintrittsöffnung eines Häckslers oder dergleichen befördert wird. Derartige Förderketten unterliegen einer Verstopfungsgefahr durch zwischen die Laschen greifendes Erntegut. Der Verschleiß dieser Ketten ist daher erheblich. Durch die aufgesetzten Schneid- und Haltewerkzeuge sind zudem die Wartung und der Austausch von Kettengliedern erschwert.

Der Erfindung liegt das Problem zugrunde, die Wartungsfreundlichkeit und Handhabung derartiger Erntegeräte zu verbessern. Die Erfindung löst dieses Problem durch ein Erntegerät mit den Merkmalen des Anspruchs 1 bzw. des Anspruchs 3. Hinsichtlich weiterer vorteilhafter Ausgestaltungen wird auf die Ansprüche 2 bzw. 4 bis 10 verwiesen.

Mit dem Erntegerät nach Anspruch 1 ist ein einfacher Umbau in Anpassung an verschiedene Arbeitsbreiten des Erntegeräts möglich. Zur Vergrößerung der Arbeitsbreite, d. h. zur Erfassung von weiteren nebeneinanderstehenden Erntegutreihen, muß der Rahmen um die entsprechende Zusatzbreite, beispielsweise für eine Reihe 75 cm, und in Anpassung hieran die Gliederkette um die entsprechende Anzahl von Kettengliedern verlängert werden. Dabei ist durch die Ganzzahligkeit des Teilungsverhältnisses gewährleistet, daß die Gliederkette immer eine exakt auf den Normabstand abgestimmte Länge einnimmt. Ein Über- oder Untermaß der Gliederkette wird dadurch vermieden. Der Normabstand kann zwischen zwei oder zwischen drei benachbarten Reihen gemessen sein. Auch eine Gliederkette, deren Glieder in ihrer Längserstreckung einen ganzzahligen Teiler eines zweifachen Reihenabstandes ausbilden, erfüllen daher die erfindungsgemäße Funktion. Wenn beispielsweise der Normabstand zwischen zwei Reihen dem Vierfachen der Kettengliederstreckung entspricht, müssen zur Verbreiterung des Erntegeräts um eine Reihenbreite für die Vorder- und der Rückseite der umlaufenden Gliederkette jeweils vier Zwischenglieder eingesetzt werden, insgesamt also ein Zusatzstück mit acht Kettengliedern. Da bei einer Erweiterung jeweils eine Verlängerung der Kette notwendig ist, die dem Doppelten der gewünschten Verbreiterung des Arbeitstrums entspricht, ist auch bei einer Kettengliederstreckung, die einem ganzzahligen Teiler eines zweifachen Reihenabstandes entspricht, die Verbreiterung um einen Reihenabstand immer mit der Hinzunahme einer ganzzahligen Anzahl von Kettengliedern verbunden. Bei einer Erweiterung um zwei Reihenabstände gilt dies selbstverständlich auch.

Bei Ausbildung der Kettenglieder als einheitliche Funktionskörper, die direkt mit den auswärts weisenden Haltemitteln versehen sind, ist die Verstopfungsgefahr der Kette erheblich vermindert, da sich in offene Zwischenräume zwischen den Laschen einer üblichen Laschenkette bzw. zwischen diesen und Einhängungen von Haltemitteln oder Schneidmitteln keine Halme oder dergleichen Erntegut festsetzen können. Zudem sind alle Glieder einer Kette einheitlich ausgebildet, wodurch eine Erweiterung oder Verkürzung der Kette gemäß Anspruch 1 erleichtert ist. Irgendwelche zusätzlichen Funktionselemente müssen nicht angebracht werden.

Ein besonders geringer Verschleiß resultiert insbesondere, wenn die Kettenglieder ihrer Erstreckung folgende Abweiseschilde aufweisen, die ein Eindringen von Erntegut in Kettenzwischenräume von der Vorderseite, die gegen das Erntegut angefahren wird, verhindern.

Wenn die Kettenglieder mehrere Halteebenen aufweisen und die obere Halteebene mit dem oberen Abweiseschild gegenüber der unteren Halteebene entgegen der Fahrtrichtung einwärts versetzt ist, wird auf der vorderen Arbeitstrumseite der Gliederkette eine Schräglage der abgeschnittenen Halme erreicht, so daß diese nach hinten geneigt der Eintrittsöffnung der Häckseleinrichtung oder dergleichen zugeführt werden und nicht nach vorne aus dem Mähwerk herausfallen können.

Weitere Vorteile und Merkmale ergeben sich aus einem in der Zeichnung dargestellten Ausführungsbeispiel des Gegenstandes der Erfindung. In der Zeichnung zeigt:

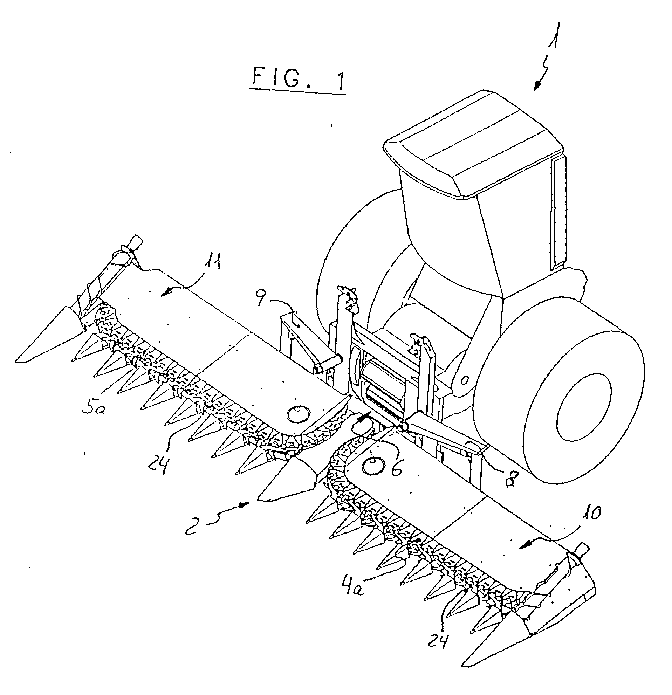

- Fig. 1: eine perspektivische Ansicht eines erfindungsgemäßen Erntegeräts mit zwei in einem Vorsatzgerät gegeneinander umlaufenden Gliederketten,

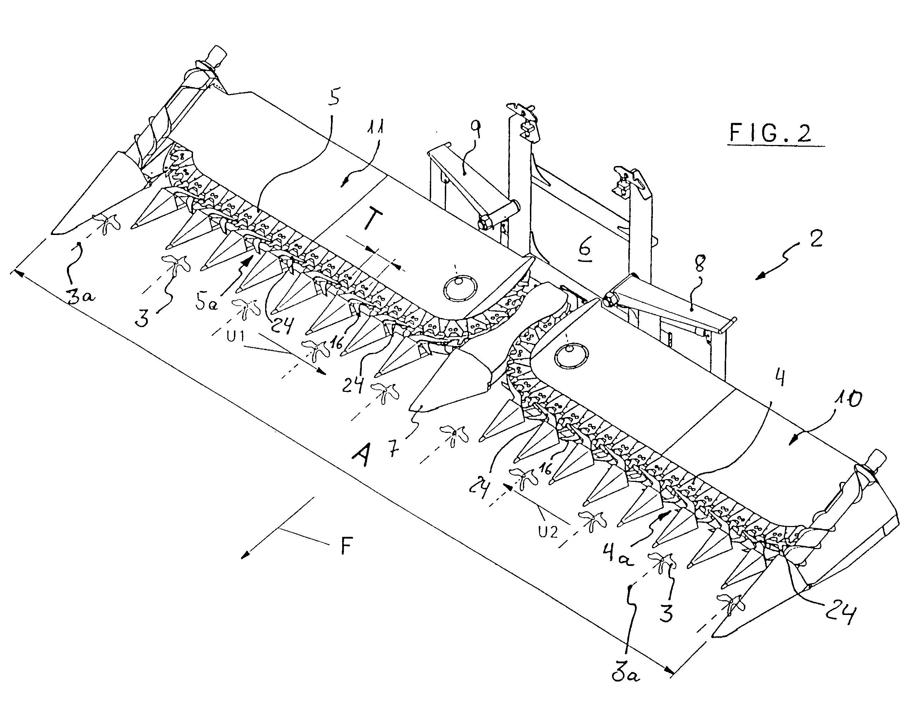

- Fig. 2: eine perspektivische Ansicht des Vorsatzgeräts,

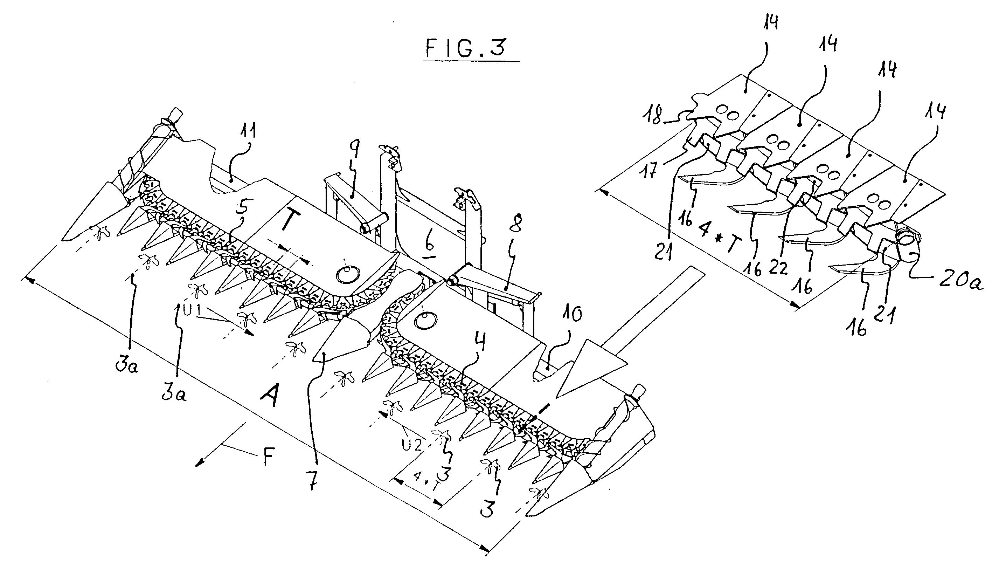

- Fig. 3: eine ähnliche Ansicht wie Fig. 2 mit zusätzlich herausvergrößertem Teilbereich einer Gliederkette,
- Fig. 4: ein einzelnes, einen einheitlichen Funktionskörper bildendes Kettenglied.

Gemäß dem Ausführungsbeispiel ist das Erntegerät 1 als Selbstfahrer ausgebildet und umfaßt ein Vorsatzgerät 2, das das Erntegut 3 über zwei Gliederketten 4,5 aufnimmt und einer Eintrittsöffnung 6 eines Häckslers oder einer andersartigen Weiterverarbeitungseinrichtung zuführt. Die Gliederketten 4,5 laufen dabei in Richtung der Pfeile U1 bzw. U2 mit ihrem Arbeitstrum 4a bzw. 5a auf eine vertikale Längsmittelebene des Erntegeräts 1 zu. Damit kann ein Erntegutstreifen mit einer Vielzahl von nebeneinander angeordneten Erntegutreihen 3a abgeerntet werden. Gleichwohl kann das Erntegerät 1 auch reihenunabhängig eingesetzt werden. In der Regel werden jedoch die Maisfelder in Reihen angebaut und auch abgeerntet, was insbesondere den Vorteil mit sich bringt, daß Lenkautomaten für die Erntegeräte 1 eingesetzt werden können, die die Stellung der Reihen 3a ertasten und eine entsprechende Führung des Erntegeräts 1 vornehmen. Zudem ist bei der Maisernte eine Erdanhäufung im Bereich der Maisreihen 3a vorzufinden, die bei schrägem Überfahren zu einer unruhigen Fahrweise des Erntegeräts 1 führt. Aufgrund der Vertiefungen zwischen den Erntegutreihen 3a kann auch bei einer schräg oder quer zu diesen verlaufenden Aberntung eine gleichbleibende Schnitthöhe nicht garantiert werden. Es besteht die Gefahr, daß die Schneid- und Einzugseinrichtung in den Boden stößt und dadurch Erde und Schmutz aufnimmt und in das Gerät einzieht bzw. daß die Maispflanzen zu hoch abgeschnitten werden.

Zwischen den Gliederketten 4 und 5 ist eine Teilerspitze 7 vorgesehen, die eine Abweisung von mittleren Erntegutreihen 3a hin zu den seitlichen Gliederketten 4 und 5 bewirkt, von denen das Erntegut 3 einerseits abgeschnitten und andererseits zur Eintrittsöffnung 6 der Weiterverarbeitungseinrichtung befördert wird. Die Gliederketten 4 und 5 sind in Rahmen 10,11 gehalten, wobei die Rahmen insgesamt um in etwa parallel zur Fahrzeuglängsachse liegende Schwenkachsen mittels Tragrahmen 8,9 verschwenkbar sind. Hierdurch werden sie von der parallel und im wesentlichen horizontal nebeneinanderliegenden Betriebsstellung in eine im wesentlichen vertikale Transportstellung verschwenkt.

In Betriebsstellung ist die Gesamtarbeitsbreite mit A bezeichnet. Die Gliederketten 4,5 umfassen Kettenglieder 14,15, die jeweils als einheitliche Funktionseinheiten ausgebildet sind und Schneidmittel 16 und/oder Haltemittel 17,18 aufweisen. Da die Ketten 4 und 5 jeweils zur Mitte hin fördern, also entgegengesetzte Förderrichtungen U1 und U2 haben, sind entsprechend auch die Kettenglieder 14 spiegelsymmetrisch zu den Kettengliedern 15. Dieses ist insbesondere wichtig für die Schneidmittel 16, die im Ausführungsbeispiel als hakenförmige Messer ausgebildet sind, wobei in der Innenkrümmung des Hakens der Schnitt stattfindet. Auch die Haltemittel 17,18 sind schräg gestellt, um dadurch einen seitlich geneigten Transport der abgetrennten Halme zu ermöglichen. Im Ausführungsbeispiel weisen die Kettenglieder 14,15 eine mit Schneidmitteln 16 versehene Schneidebene S sowie eine mit Haltemitteln 17 versehene erste Halteebene H1 und eine mit Haltemitteln 18 versehene zweite Halteebene H2 auf. Die Kettenglieder 14,15 sind jeweils einheitlich ausgebildet, d. h., die Halte- und/oder Schneidmittel 16,17,18 sind Bestandteil der Kettenglieder 15 und nicht nur als Aufsatzstücke mit diesen lösbar verbunden.

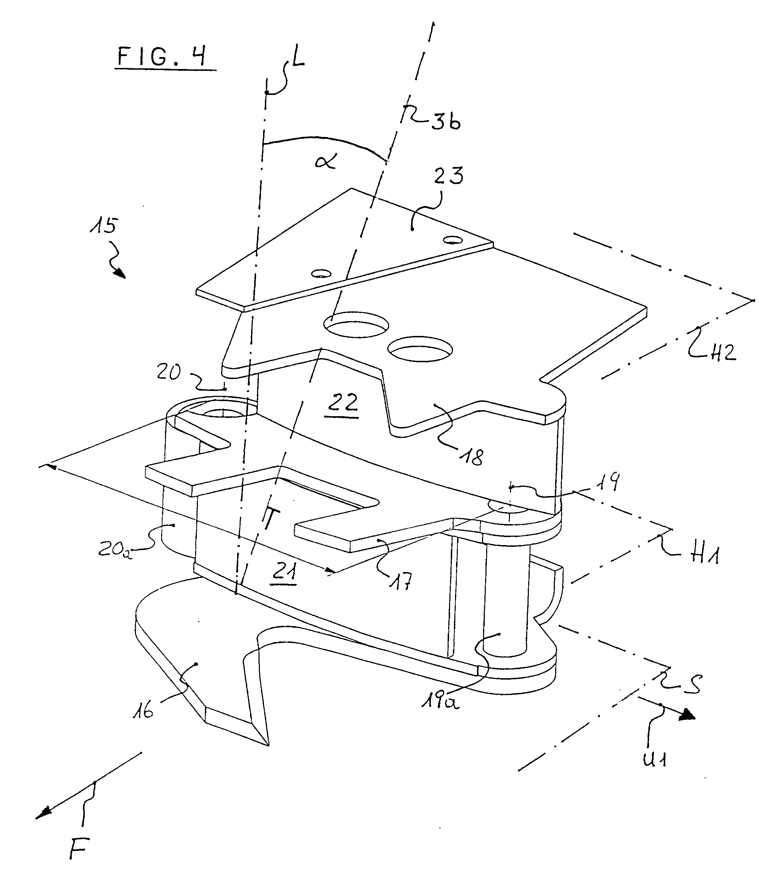

Die Funktionskörper 14 bzw. 15 grenzen unmittelbar aneinander an, wobei an einem Ende eines Funktionskörpers 14,15 ein Achskörper 19a ausgebildet ist, der von einem Hülsenkörper 20a am anderen Ende des nächsten Funktionskörpers 14,15 umgreifbar ist. Durch die Vermeidung eines Zwischenraums zwischen den Kettengliedern 14,15 ist einer Verschmutzung und Verstopfung dieser Gelenkbereiche vorgebeugt. Die Kettenglieder 14,15 weisen ihrer Erstreckung T in Umlaufrichtung U1 bzw. U2 folgende und im wesentlichen vertikal oder leicht schräg stehende Abweiseschilde 21,22 auf, die den Funktionskörper 14,15 nach vorne hin, also in Fahrtrichtung F, in der das Arbeitstrum 4a bzw. 5a der Gliederketten 4 bzw. 5 auf das Erntegut 3 trifft, abschirmen. Die Abweiseschilde 21,22 erstrecken sich zwischen dem Hülsenkörper 20a einerseits und einem weiteren Hülsenkörper 20a eines benachbarten Glieds 14,15, das den Achskörper 19a umgreift, im wesentlichen vollflächig, um das Eindringen von Erntegutteilen auch im Bereich der Drehachsen 19,20 zuverlässig unterbinden zu können. Die Abweiseschilde 21,22 können beispielsweise als Stahlbleche ausgebildet und über eine Schrauboder Steckverbindung auswechselbar festgelegt sein. Auch ein Verschweißen kommt in Betracht. Ebenso können die Kettenglieder 14,15 als einheitliche Gußteile ausgebildet sein. Der untere Abweiseschild 21 ist zwischen der Schneidebene S und der ersten Halteebene H1 mit den Haltemitteln 17 angeordnet, der obere Abweiseschild 22 ist zwischen der Halteebene H1 und der Halteebene H2 mit den Haltemitteln 18 angeordnet. Ein derartiger Funktionskörper 15, wie in Fig. 4 dargestellt, bildet eine insgesamt auswechselbare Einheit aus. Die einzelnen Haltemittel 17,18 bzw. Schneidmittel 16 müssen nicht als Einzelteile an Normkettenglieder anmontiert werden. Alle Kettenglieder 14 bzw. 15 sind jeweils gleichartig. Durch die frontseitige Abschirmung durch die Abweiseschilde 21,22 ist auch innerhalb der Kettenglieder 14,15 ein Eindringen von Schmutz oder Erntegut vermieden, so daß die Lebensdauer der Kettenglieder 14,15 erhöht ist. Um auch ein Eindringen von Schmutz von oben zu verhindern, sind Überlappungsbleche 23 vorgesehen, die einen Spalt zwischen den Kettengliedern im Bereich der oberen Haltemittel 18 abdecken. Der obere Abweiseschild 22 ist gegenüber dem unteren Abweiseschild 21 entgegen der Fahrtrichtung F einwärts nach hinten versetzt, ebenso der Kantenbereich der Haltemittel 18 gegenüber dem vorderen Kantenbereich der Haltemittel 17. Auch bei einer Schrägstellung des Vorsatzgeräts 2 mit einer dadurch gegen die Fahrtrichtung F ansteigenden Umlaufebene der Gliederketten 4,5 können abgetrennte Halme 3b - in Fig. 4 gestrichelt angedeutet - gegenüber dem Lot L um einen Winkel α gegen die Fahrtrichtung F mehr oder weniger geneigt transportiert werden, so daß ein Herauskippen der Halme 3b aus dem Erntegerät 1 in Fahrtrichtung F weitgehend verhindert ist.

Durch die Ausbildung der Kettenglieder als einheitlicher Funktionskörper ist auch deren leichte Auswechselbarkeit bzw. Verlängerung oder Verkürzung der Gliederkette 4,5 einfach gewährleistet. Insbesondere in Kombination mit diesem einheitlichen Funktionskörper, aber auch als einzelne Maßnahme ist es erfindungsgemäß vorgesehen, die Erstreckung T eines Glieds 14 bzw. 15 der Gliederkette 4,5 als ganzzahligen Teiler eines Normabstandes zwischen Reihen 3a von normiert angebautem Erntegut 3 auszubilden. Dadurch wird eine Fertigung des Erntegeräts 1 nach Kundenwünschen bezüglich verschiedener Arbeitsbreiten ohne großen Aufwand möglich. Entsprechend der gewünschten Anzahl von abzumähenden Reihen 3a, muß abseits einer Rahmenverlängerung oder -verkürzung lediglich die entsprechende Anzahl von Kettengliedern 14,15 eingesetzt bzw. herausgenommen werden. Die Anpassung ist dann automatisch gewährleistet. Soll beispielsweise die zu mähende Breite um eine Reihe vergrößert werden, so ist beispielsweise bei einem Normabstand von zwei Reihen 3a, der dem Vierfachen der Kettengliederstreckung T entspricht, eine Verlängerung von acht Kettengliedern einzusetzen. Diese können bereits als Set vorher zusammengesetzt sein und müssen dann nur noch als ganzes in die Kette 4 bzw. 5 eingesetzt werden. Entsprechend kann auch nach Ausbau einer solchen Anzahl von Kettengliedern 14,15 die Gruppe von Kettengliedern als Einheit zusammengehalten werden. Die Umbauzeiten sind damit verkürzt, der Montageaufwand ist erheblich verringert. Es müssen nur die zwei unterschiedlichen Kettenglieder 14 bzw. 15 für die linke oder rechte Kette 4,5 vorgehalten werden, was die Ersatzteillagerung vereinfacht. Es ist möglich, die Rahmen 10,11 teleskopisch auszubilden, so daß sie für verschiedene Arbeitsbreiten Verwendung finden können.

Ein Antrieb der jeweiligen Gliederketten 4,5 findet über Umlenkräder in randseitigen Endbereichen der Rahmen 10,11 statt. Im mittleren Bereich liegen die Ketten 4,5 auf Gleitebenen auf, die durch die Oberseiten von Gegenschneiden ausgebildet sind und die bei der Montage oder beim Umbau gegebenenfalls mit den Rahmen verlängert oder verkürzt werden müßten. Weitergehende Führungen sind allerdings nicht erforderlich, was die Montage oder den Umbau erleichtert.

In Betrieb werden die angefahrenen Stengel des Ernteguts 3 von den winkelartig abgebogenen Schneidmitteln 16 erfaßt und zwischen diesen und einer dem Rahmen 10 bzw. 11 zugeordneten Gegenschneide abgetrennt. Die Gegenschneide kann dabei feststehend sein oder beispielsweise einzelne rotierende und nebeneinander angeordnete Schneidscheiben umfassen. Die so abgetrennten Halme werden zwischen den Haltemitteln 17 und 18 in der erwähnten Schrägstellung gehalten, wobei als frontseitiges Gegenlager Bügel 24 dienen, so daß die abgetrennten Stengel zwischen den Bügeln 24 und den Haltemitteln 17,18 in Umlaufrichtung U1 bzw. U2 zum mittleren Bereich des Vorsatzgerätes 2 transportiert werden und dort gegen die Fahrtrichtung F zwischen den Randbereichen des mittleren Teilers 7 und den Haltemitteln 17,18 der umlaufenden Kettenglieder 14,15 der Eintrittsöffnung 6 der Weiterverarbeitungseinrichtung zugeführt werden. Die Bügel 24 können federnd gehalten sein, um damit flexible Abstände gegenüber den Haltemitteln 17,18 zu erreichen.

## Patentansprüche

1. Erntegerät (1) zum Ernten von Mais oder dergleichen stengelartigem Erntegut, wobei das Erntegerät (1) zumindest eine mit Haltemitteln (17;18) für das abgemähte Erntegut (3) versehene Gliederkette (4;5) umfaßt, die eine Arbeitstrumseite (4a;5a) aufweist, welche im Einsatz quer zur Fahrtrichtung (F) des Erntegeräts (1) bewegbar ist, **dadurch gekennzeichnet, daß** die in Umlaufrichtung (U1;U2) gemessene Erstreckung (T) eines Glieds (14;15) der Gliederkette (4;5) im wesentlichen einem ganzzahligen Teiler eines Normabstandes zwischen Reihen (3a) von normiert angebautem Erntegut (3) entspricht.

2. Erntegerät nach Anspruch 1, **dadurch gekennzeichnet, daß** der Normreihenabstand (4T) dem Vierfachen der Kettengliederstreckung (T) in Umlaufrichtung (U1;U2) entspricht.

3. Erntegerät (1) zum Ernten von Mais oder dergleichen stengelartigem Erntegut, wobei das Erntegerät (1) zumindest eine mit Haltemitteln (17;18) für das abgemähte Erntegut (3) versehene Gliederkette (4;5) umfaßt, die eine Arbeitstrumseite (4a;5a) aufweist, welche im Einsatz quer zur Fahrtrichtung (F) des Erntegeräts (1) bewegbar ist, **dadurch gekennzeichnet, daß** die Kettenglieder (14;15) als einheitliche Funktionskörper mit auswärts weisenden Schneidmitteln (16) und/oder Haltemitteln (17;18) versehen sind.

4. Erntegerät nach Anspruch 3, **dadurch gekennzeichnet, daß** die Funktionskörper (14;15) drei Ebenen (S;H1;H2) aufweisen, von denen eine untere (S) als Schneidebene und zwei parallel darüberliegende (H1;H2) als Halteebenen für das abgetrennte Erntegut (3) ausgebildet sind.

5. Erntegerät nach einem der Ansprüche 3 oder 4, **dadurch gekennzeichnet, daß** die Funktionskörper (14;15) unmittelbar aneinander angrenzen.

6. Erntegerät nach einem der Ansprüche 3 bis 5, **dadurch gekennzeichnet, daß** die Funktionskörper (14;15) in Funktion im wesentlichen vertikale und der Erstreckung (T) der Kettenglieder (14;15) in Umlaufrichtung (U1;U2) folgende Abweiseschilde (21;22) aufweisen.

7. Erntegerät nach einem der Ansprüche 3 bis 6, **dadurch gekennzeichnet, daß** die Kettenglieder (14;15) an ihrem in Umlaufrichtung (U1;U2) vorderen und hinteren Ende jeweils über Gelenkachsen (19;20) miteinander verbunden sind und Achskörper 19a der Gelenkachsen (19) von Hülsenkörpern (20a) dichtend umgriffen sind.

8. Erntegerät nach einem der Ansprüche 6 oder 7, **dadurch gekennzeichnet, daß** die Abweiseschilde (21;22) sich zwischen den Gelenkachsen (19;20) im wesentlichen vollflächig erstrecken.

9. Erntegerät nach einem der Ansprüche 6 bis 8, **dadurch gekennzeichnet, daß** ein Abweiseschild (21) zwischen der Schneidebene (S) und einer darüberliegenden Halteebene (H1) und ein weiterer Abweiseschild (22) zwischen dieser Halteebene (H1) und einer oberen Halteebene (H2) angeordnet ist.

10. Erntegerät nach Anspruch 9, **dadurch gekennzeichnet, daß** der obere Abwieseschild (22) gegenüber dem unteren (21) entgegen der Fahrtrichtung (F) versetzt ist.

## Claims

1. Harvesting equipment (1) for harvesting maize or similar stemmed crops, whereby the harvesting equipment (1) comprises at least one linked chain (4; 5) provided with means of retention (17; 18) for the cut harvested crop (3), which chain exhibits a working side (4a; 5a) which, when in use, can be moved transversely to the direction of travel (F) of the harvesting equipment (1), **characterised in that** the length (T) of a link (14; 15), measured in the rotating direction (U1; U2), corresponds essentially to a whole number divisor of a standard distance between rows (3a) of harvested crop (3) cultivated by a standard method.

2. Harvesting equipment according to claim 1, **characterised in that** the standard distance between rows (4T) is equal to four times the chain link length (T) in the rotating direction (U1; U2).

3. Harvesting equipment (1) for harvesting maize or similar stemmed crops, whereby the harvesting equipment (1) comprises at least one linked chain (4; 5) provided with means of retention (17; 18) for the harvested crop (3), which chain exhibits a working side (4a; 5a) which, when in use, can be moved transversely to the direction of travel (F) of the harvesting equipment (1), **characterised in that the** chain links (14; 15) are provided as uniform functional bodies with outwardly directed cutting means (16) and/or means of retention (17; 18).

4. Harvesting equipment according to claim 3, **characterised in that** the functional bodies (14; 15) exhibit three planes (S; H1; H2), a lower one (S) of which is designed as the cutting plane, and two planes (H1; H2) lying parallel with and above it are designed as retaining planes for the cut crop (3).

5. Harvesting equipment according to one of claims 3 or 4, **characterised in that** the functional bodies (14; 15) are immediately adjacent to each other.

6. Harvesting equipment according to one of claims 3 to 5, **characterised in that** the functional bodies (14; 15), when in operation, exhibit vertical deflector plates (21; 22) that follow the length (T) of the chain links (14; 15) in the rotating direction (U1; U2).

7. Harvesting equipment according to one of claims 3 to 6, **characterised in that** the chain links (14; 15) are connected to each other by articulated shafts (19; 20) at their front and rear end, viewed in the rotating direction (U1; U2), and **in that** axial bodies 19a of the articulated shafts (19) are sealed by sleeved bodies (20a).

8. Harvesting equipment according to one of claims 6 or 7, **characterised in that** the deflector plates (21; 22) extend essentially symmetrically between the articulated shafts (19; 20).

9. Harvesting equipment according to one of claims 6 to 8, **characterised in that** a deflector plate (21) is arranged between the cutting plane (S) and plane of retention (H1) above it, and **in that** a further deflector plane (22) is arranged between this plane of retention (H1) and an upper plane of retention (H2).

10. Harvesting equipment according to claim 9, **characterised in that** the upper deflector (22) is offset relative to the lower plate (21) against the direction of travel (F).

## Revendications

1. Appareil de moissonnage (1) pour le moissonnage de maïs ou de céréales à tige similaires, l'appareil de moissonnage (1) comportant au moins une chaîne à maillons (4; 5) pourvue de moyens de retenue (17; 18) des céréales (3) moissonnées, laquelle présente un côté brin menant (4a; 5a) pouvant être déplacé en cours d'utilisation transversalement au sens de la marche (F) de l'appareil de moissonnage (1), **caractérisé en ce que** la longueur (T) d'un maillon (14; 15) de la chaîne à maillons (4; 5), mesurée dans le sens de rotation (U1; U2), correspond substantiellement à un diviseur entier d'une distance standard entre les lignes (3a) de céréales (3) cultivées de manière normalisée.

2. Appareil de moissonnage selon la revendication 1, **caractérisé en ce que** la distance standard (4T) entre les lignes correspond à quatre fois la longueur (T) d'un maillon de chaîne dans le sens de rotation (U1 ; U2).

3. Appareil de moissonnage (1) pour le moissonnage de maïs ou de céréales à tige similaires, l'appareil de moissonnage (1) comportant au moins une chaîne à maillons (4; 5) pourvue de moyens de retenue (17; 18) des céréales (3) moissonnées, laquelle présente un côté brin menant (4a; 5a) pouvant être déplacé en cours d'utilisation transversalement au sens de la marche (F) de l'appareil de moissonnage (1), **caractérisé en ce que** les maillons (14; 15) de chaîne (4; 5) sont pourvus de moyens de coupe (16) et/ou de moyens de retenue (17; 18) orientés vers l'extérieur, en tant que corps fonctionnels formant une unité.

4. Appareil de moissonnage selon la revendication 3, **caractérisé en ce que** les corps fonctionnels (14; 15) présentent trois plans (S; H1; H2), dont un plan inférieur (S) est conformé comme plan de coupe et deux plans (H1 ; H2) parallèles sus-jacents sont conformés comme plans de retenue des céréales (3) coupées.

5. Appareil de moissonnage selon la revendication 3 ou 4, **caractérisé en ce que** les corps fonctionnels (14; 15) sont directement contigus les uns aux autres.

6. Appareil de moissonnage selon l'un quelconque des revendications 3 à 5, **caractérisé en ce que** les corps fonctionnels (14; 15) présentent dans leurs fonctions des plaques déflectrices (21; 22) substantiellement verticales, lesquelles s'étendent dans le sens de rotation (U1; U2) sur toute la longueur (T) des maillons (14; 15) de chaîne (4; 5).

7. Appareil de moissonnage selon l'une quelconque des revendications 3 à 6, **caractérisé en ce que** les maillons (14; 15) de chaîne (4; 5) sont reliés entre eux au moyen d'axes d'articulation (19; 20) à leurs extrémités avant et arrière dans le sens de rotation (U1; U2) et **en ce que** les corps (19a) des axes d'articulation (19) sont entourés de manière étanche par des corps de douilles (20a).

8. Appareil de moissonnage selon la revendication 6 ou 7, **caractérisé en ce que** les plaques déflectrices (21; 22) s'étendent substantiellement sur toute la surface entre les axes d'articulation (19; 20).

9. Appareil de moissonnage selon l'une quelconque des revendications 6 à 8, **caractérisé en ce qu'**une plaque déflectrice (21)est disposée entre le plan de coupe (S) et un plan de retenue (H1) sus-jacent et une autre plaque déflectrice (22) est disposée entre ledit plan de retenue (H1) et un plan de retenue (H2) supérieur.

10. Appareil de moissonnage selon la revendication 9, **caractérisé en ce que** la plaque déflectrice (22) supérieure est décalée par rapport à la plaque déflectrice (21) inférieure dans le sens opposé au sens de la marche (F).
